# FASCICULE DE BREVET EUROPEEN

(11) **EP 1 171 666 B1**
(45) Date de publication et mention de la délivrance du brevet: **24.05.2006**
(21) Numéro de dépôt: 00915248.9
(22) Date de dépôt: 30.03.2000
(51) Int. Cl.: E01C 11/22, E03F 3/04, B29C 49/00, B29C 69/00, H02G 9/04

(54) **Elément thermoplastique pour caniveau, procédé de fabrication et d'assemblage associés et kit de construction comportant de tels éléments**
Thermoplastisches Rinnenelement, Herstellungs- und Montageverfahren desselben und Bausatz mit mehreren Rinnenelementen
Thermoplastic conduit element, methods of manufacturing and assembling the same and construction kit with such elements

(30) Priorité: 31.03.1999 FR 9904005; 31.03.1999 FR 9904006; 31.03.1999 FR 9904007
(43) Date de publication de la demande: 16.01.2002
(73) Titulaire: Aliaxis R&D S.A.S., 78540 Vernouillet (FR)
(72) Inventeur: BLANDIN, Jean-Claude, F-49300 Cholet (FR); BENESTEAU, Claude, F-49300 Cholet (FR); PICHON, Daniel, F-85290 Saint Laurent sur Seure (FR)
(74) Mandataire: Fosse, Danièle
(86) Numéro de dépôt international: PCT/FR2000/000791
(87) Numéro de publication internationale: WO 2000/058560

(56) Documents cités:
- WO-A-97/25481
- DE-A- 19 725 976
- DE-U- 29 808 197
- FR-A- 2 735 506
- US-A- 4 357 190

## Description

La présente invention concerne un élément de caniveau à pente selon l'écoulement des eaux, ou pour chemin de câbles enterré, obtenu par extrusion d'au moins un polymère thermoplastique du type PVC, ABS, Polypropylène, ainsi qu'un procédé de fabrication d'un tel élément, ainsi qu'un procédé et un kit de construction comportant de tels éléments de caniveau.

Un tel élément de caniveau est couramment utilisé pour le drainage dans le bâtiment et les travaux publics ou pour l'enfouissement des câbles le long des voies de communication.

Pour la réalisation de caniveaux de drainage on fait appel le plus souvent à des éléments de caniveau en béton ou en béton de polymère de forme en "U" qui sont mutuellement alignés par leurs faces d'extrémité, et dont les branches qui s'étendent verticalement servent d'appui en partie supérieure pour une grille.

De tels éléments présentent un certain nombre d'inconvénients inhérents à leur constitution : ils s'avèrent lents à fabriquer du fait de leur technique de fabrication par moulage de pièces unitaires. Leur poids élevé implique une limitation de leur longueur car, dans le cas contraire, ils seraient difficiles à mettre en oeuvre sur le terrain. Enfin, la multiplicité des éléments requis pour la réalisation du conduit de drainage ou du chemin de câbles pose des problèmes d'étanchéité des raccordements entre les différents éléments.

Ces inconvénients grèvent sensiblement le coût du conduit posé sur le chantier et surtout lorsqu'il s'agit de réaliser un caniveau de drainage à pente pour compenser l'absence de pente naturelle du sol. En effet, dans ce cas, il convient de prévoir tout une série d'éléments de caniveau différents, de l'ordre de 20 à 30 pièces présentant des hauteurs différentes, pour obtenir une pente d'écoulement de fond de caniveau alors que la surface du sol est plane. Le nombre important des pièces requises implique pour le fabricant la réalisation de tout une série de moules et le stockage d'un nombre important de pièces différentes.

Dans le brevet EP-A-0 206 996, on s'est efforcé de diminuer le nombre d'éléments de caniveau requis pour l'obtention d'une pente d'écoulement des eaux, par l'adjonction de réhausses sur l'extrémité des branches latérales verticales du caniveau en "U". Il n'en demeure pas moins, que si ces rehausses sont plus aisées à fabriquer que les éléments de caniveau en "U", elles requièrent encore tout un jeu de pièces de hauteurs différentes avec tous les inconvénients précédemment cités.

Dans les brevets PCT WO 90/11405 et US 5 735 637, on a recréé une pente d'écoulement en faisant reposer le caniveau sur une armature métallique formant suspente ou assise réglable. Mais ce type de réalisation implique outre la nécessité d'un sol fini, une tringlerie délicate à mettre en oeuvre et à régler qui renchérit d'autant le coût du produit fini.

De manière à améliorer les caractéristiques de résistance mécanique des caniveaux en matières plastiques on a proposé de renforcer la paroi de ceux-ci.

Dans les documents DE-U-29808197 et WO-A-9401907, on a proposé un caniveau de drainage constitué d'une paroi simple, renforcé par des nervures et obtenu par injection de matières plastiques. Cependant, la structure d'un tel caniveau ne peut être utilisée pour réaliser un caniveau à pente, son mode de fabrication par injection interdisant d'envisager des pièces de longueur telles que celles qui sont réalisables par extrusion.

Aucun de ces caniveaux à simple paroi ne permet de combiner un renforcement suffisant et un mode de mise en oeuvre économiquement intéressant.

Dans le document WO-A-9725481, on a proposé un revêtement à simple ou à double paroi à rapporter sur un caniveau neuf ou à rénover déjà existant. Cette deuxième paroi du revêtement définit avec la première paroi des chambres de rétention pour des liquides qui auraient pu franchir accidentellement ladite paroi ; cette double paroi sert donc à définir ces chambres de rétention et joue le rôle de compensateur de dilatation et non un rôle de renforcement.

La présente invention a pour but principal de remédier à ces différents inconvénients et permet d'obtenir un élément de caniveau en matière thermoplastique, enterrable, rigide, pouvant être fabriqué en grande longueur, d'une grande résistance mécanique, mais demeurant néanmoins manipulable du fait de sa légèreté. Selon un autre objet de l'invention, un tel élément de caniveau utilisé pour le drainage évite la multiplicité des pièces requises pour créer une pente d'écoulement des eaux et diminue le risque de fuite au niveau de la jonction entre éléments.

A cet effet, l'invention concerne un élément de caniveau en matière thermoplastique, conforme à la revendication 1.

on obtient ainsi un élément de caniveau particulièrement léger et résistant qui associe les fonctions mécaniques et hydrauliques recherchées.

Les annelures renforcent les branches du caniveau et participent à l'accroissement de la résistance mécanique requise pour que le caniveau, une fois enterré et noyé dans un lit de béton, puisse supporter les contraintes engendrées à partir de la surface du sol par les véhicules roulants.

Selon une caractéristique de l'invention, une zone d'appui formant semelle pour l'élément de caniveau s'étend sous toute la longueur du corps dépourvue d'annelures et ménage avec les parois inférieures des branches verticales dudit corps deux embrèvements latéraux. Cette disposition favorise une bonne assise du caniveau lors de sa mise en place dans une tranchée et son maintien dans un lit de béton venant emprisonner les extrémités saillantes de la zone d'appui.

Après annelage, les parois verticales des branches de l'élément de caniveau sont découpées longitudinalement pour que la hauteur requise des deux branches, soit, selon le cas, égale ou différente entre les extrémités d'entrée et de sortie du caniveau.

Dans le cas d'une pente souhaitée, l'on prévoira une différence de 0,5 à 0,8 % entre les hauteurs d'entrée et de sortie du caniveau de sorte qu'une fois les extrémités des branches réglées sur le niveau du sol, le canal d'écoulement entraîne les liquides véhiculés en direction d'une sortie d'évacuation.

Pour assurer un grand moment d'inertie, donc une rigidité élevée des parois verticales, avec un minimum de matière, on préfère des annelures de type rectangulaire présentant une alternance de parties planes et ondulées. En particulier, pour une épaisseur de paroi de 12 à 20 mm, le pas des annelures se situe entre 25 et 45 mm et la largeur d'une annelure est préférentiellement comprise entre 20 et 35 mm.

En effet, si la largeur dépasse 35 mm, il peut se produire une déformation de l'annelure par application d'une force (poussée du béton, du sol, ..) amenant une diminution du moment d'inertie de la paroi du caniveau. A l'inverse, si la largeur est inférieure à 20 mm, l'annelure se déforme moins, mais le moment d'inertie global de la paroi est insuffisant en raison de la présence en plus grand nombre de zones en creux formant simple point de soudure.

De plus, le pas est choisi de telle façon que les contraintes mécaniques dans les zones formant soudures demeurent inférieures à la résistance pratique admissible par le matériau.

Selon une autre caractéristique de l'invention, l'extrémité supérieure des branches verticales de l'élément de caniveau est recouverte d'une feuillure longitudinale, de préférence métallique, en "h" qui rigidifie cette partie et maintient la grille de surface. Cette feuillure peut être ondulée ou nervurée sur au moins l'une de ses ailes inférieures et reprendre sur une certaine hauteur de branche verticale les efforts de flambage induits par les sollicitations mécaniques du produit in situ. Elle peut également être du type classique et vient alors pincer l'extrémité supérieure de la branche verticale et enserrer par un pli longitudinal les parties saillantes vers l'extérieur des annelures.

Une fois positionnée sur les branches verticales, la feuillure constitue un appui horizontal pour la grille de surface et contribue au maintien de cette dernière sur le caniveau.
Pour la fixation de la grille sur les deux feuillures de l'élément de caniveau, on connaît dans les brevets EP-A-081741, EP-A-0248427, EP-A-0578445 des caniveaux en béton ou en béton de résine dont la grille repose sur une feuillure métallique constituant surface d'appui sur le caniveau. La grille se trouve verrouillée au corps du caniveau par un verrou central en prise avec des évidements ménagés dans les branches verticales. En variante et comme décrit dans les brevets EP 112287, EP 151684, PCT WO 97/20993 notamment, des caissons de retenue sont insérés dans lesdites branches. L'ensemble ainsi formé est verrouillable à partir de la surface du sol de sorte qu'il puisse être aisément démonté tout en supportant les contraintes engendrées ultérieurement par la circulation des personnes et des véhicules qui tendent à déplacer voir à désolidariser à terme la grille de son logement.

Une telle conception de la fixation d'une grille de surface sur un caniveau annelé présente un certain nombre d'inconvénients qui découlent essentiellement du fait que le verrou central est introduit par rotation selon un plan horizontal dans des évidements ménagés en vis à vis dans la masse des branches verticales. Il s'ensuit que les évidements requis sont relativement importants et tendent à fragiliser les parois du caniveau avec parfois nécessité de mise en oeuvre dans les évidements de caissons de retenue faisant office de renfort. Cette technique certes adaptée aux éléments de caniveau obtenus par moulage de béton ou de béton de résine s'avère toutefois difficile à exécuter dès lors que l'on fait appel aux éléments extrudés de caniveau selon l'invention. En effet, l'obtention de tels évidements sur les branches verticales impliquerait après fabrication une reprise du produit par un fraisage ponctuel, solution économiquement peu viable et fragilisant de surcroît les branches du caniveau.

Selon une forme de réalisation préférée de fixation d'une grille selon l'invention, les branches verticales de l'élément de caniveau sont dotées, côté annelures externes, d'une rainure longitudinale pour l'encliquetage d'un pli longitudinal ménagé sur l'extrémité inférieure côté annelures de la feuillure. Par ailleurs, des séries de trous ou lumières traversants sont prévus sur chaque branche au débouché de certaines des ouvertures réalisées dans les annelures lors du rainurage longitudinal, lesdits trous ou lumières étant disposés ponctuellement et en vis à vis afin d'accueillir une barrette de fixation verrouillable mécaniquement à une grille de surface.

Selon un mode de réalisation préférentiel de l'invention, la barrette de fixation est constituée d'un plat métallique muni sur ses extrémités transversales d'ergots jumelés, disposés dans le même plan en prolongement de la barrette, et dont les dimensions et écartements correspondent à ceux des trous ou lumières prévus sur les branches.

Pour la mise en oeuvre de la barrette de fixation sur les branches du caniveau, les ergots jumelés de l'un des côtés de la barrette sont introduits, côté écoulement, dans une série de trous ou lumières prévus dans l'une des branches du caniveau. La barrette est ensuite ramenée par rotation en position horizontale de sorte que les ergots jumelés, du côté opposé de la barrette, puissent être introduits par translation horizontale dans la série de trous ou lumières prévus en vis à vis dans l'autre branche du caniveau.

L'invention a également pour objet un procédé de fabrication d'un élément de caniveau tel que précédemment décrit. Le procédé est caractérisé en ce qu'on forme par extrusion un profilé fermé sensiblement de forme ovale, muni en partie supérieure et inférieure d'une zone d'appui adjacente formant semelle du caniveau. L'ensemble est obtenu par extrusion, puis annelé en sortie de l'extrudeuse à l'aide d'une chenille sur au moins une partie de ses côtés latéraux, puis découpé longitudinalement en deux éléments de caniveau identiques pour un écoulement sans pente ou complémentaires pour un écoulement à pente dans un système complet.

On obtient ainsi, en une opération continue d'extrusion, deux profilés annelés qui peuvent être ensuite coupés transversalement aux dimensions souhaitées.

La découpe longitudinale peut s'effectuer en continu par tout moyen approprié et notamment par un trait de scie grâce à un asservissement de la scie de découpe en fonction de la vitesse d'extrusion du profilé. Il est ainsi possible de prévoir en continu la production d'éléments de caniveau dont les branches présentent une hauteur constante, la scie étant alors fixe. Mais l'on peut prévoir un déplacement latéral de celle-ci d'une position médiane sur le profilé fermé vers une position optimale à droite ou à gauche du profilé fermé si ce profilé est extrudé en allure horizontale ou vers une position optimale supérieure ou inférieure si ce profilé est extrudé en allure verticale. La vitesse de déplacement de la scie longitudinale asservie à la vitesse de tirage du profilé fermé caractérise alors la pente du système complet de caniveau à pente.

La présente invention vise également un procédé d'assemblage d'éléments de caniveau selon l'invention.

Elle concerne en outre des pièces d'assemblage entre les différents éléments de caniveau ainsi que toute pièce accessoire mettant en oeuvre le dit procédé.

De manière générale, les éléments de caniveau de l'art antérieur réalisés en béton ou en béton de polyester, en petites longueurs du fait de leur poids, sont mutuellement alignés par leurs faces extrêmes à l'intérieur d'une tranchée. Ces éléments comportent pour leur assemblage sur l'une des extrémités, une dépouille dans laquelle pénètre, par concordance de formes, une saillie façonnée sur l'extrémité opposée de l'élément constitutif voisin. Si une étanchéité est requise, une rainure en "U" ménagée au niveau de l'emboîture est comblée à l'aide d'une masse d'étanchement ou, comme dans FR-A-2.735.506, à l'aide d'une pièce d'étanchement en caoutchouc ou en matière plastique destinée à être encastrée ou collée dans la rainure de la dépouille.

Tous ces modes de fixation et d'étanchement d'éléments de caniveau s'avèrent malheureusement inadaptés dès lors que les faces verticales externes du caniveau sont annelées.

Ainsi, le procédé d'assemblage selon l'invention vise à raccorder de manière aisée les différents éléments d'un caniveau annelé, à permettre leur raccordement à joint ou à coller au choix, à obtenir une étanchéité du raccordement tant vis à vis des eaux canalisées (caniveau de drainage) que des eaux pénétrantes (chemin de câbles enterré).

A cet effet, le procédé d'assemblage est caractérisé en ce que l'extrémité de la double paroi annelée de chaque branche verticale de l'élément de caniveau est coupée transversalement pour désolidariser la paroi externe annelée de la paroi interne, en ce que les extrémités des nervures de rigidification de la zone d'appui formant semelle de l'élément de caniveau et de la partie inférieure des annelures contiguë à la semelle sont évidées, et en ce qu'une pièce d'assemblage munie d'au moins une série de bossages est introduite dans les coupes et évidements ménagés sur les extrémités de l'élément de caniveau.

La coupe transversale pratiquée par sciage effectue une désolidarisation de l'annelure d'extrémité par rapport à la paroi interne du caniveau, et crée ainsi une ouverture donnant accès à une chambre creuse ménagée à l'intérieur de la double paroi, dans laquelle viendra s'encliqueter l'un des bossages d'une pièce d'assemblage.

Les évidements des extrémités des nervures de rigidification et de la partie inférieure des annelures d'extrémité sont obtenus par un détourage extérieur de la paroi interne sur chaque face sciée transversalement et écartée. Une deuxième scie réalise ce détourage sur une profondeur requise.

Un kit de construction comportant deux éléments pour caniveau et une pièce d'assemblage est utilisé pour la mise en oeuvre du procédé d'assemblage suivant l'invention.

La pièce d'assemblage présente une forme en "U" complémentaire de la paroi lisse côté extérieur de la paroi interne de l'élément de caniveau pour faciliter le collage éventuel contre cette paroi et est munie d'au moins une série de bossages. Dans ce cas, la pièce d'assemblage fait appel à un polymère thermoplastique du type PVC, ABS, polypropylène compatible avec la matière thermoplastique de l'élément de caniveau. L'épaisseur de la pièce d'assemblage correspond sensiblement à celle de l'ouverture ménagée par sciage dans les annelures lors de la coupe transversale de l'élément de caniveau.

La pièce d'assemblage comporte de préférence un double bossage droit et gauche, de forme complémentaire à celle des annelures d'extrémité, ménagé sur le côté extérieur de la forme en "U", sensiblement sur la moitié supérieure des parties verticales pour favoriser l'encliquetage à l'intérieur de l'annelure correspondante de l'élément de caniveau adjacent. Un chanfrein d'entrée prévu au niveau de chaque bossage permet de faciliter l'introduction du bossage dans l'annelure.

Pour tenir compte des contraintes liées à l'injection des polymères thermoplastiques et pour éviter toute surépaisseur locale de matière, les bossages présentent dans leur hauteur toute une série d'encoches horizontales découpant à intervalles réguliers chacun des deux bossages en de multiples sections. Dans le cas d'un caniveau à pente, il est ainsi possible d'éliminer par tout moyen approprié certaines sections pour adapter la hauteur des parties verticales à celle des branches verticales des deux éléments de caniveau à assembler. Cette adaptation peut être réalisée préalablement à l'opération d'encliquetage-collage, également après pose par coupe ou sciage des parties émergeantes, mais préalablement toutefois à l'introduction de la feuillure de maintien de la grille de surface.

La pièce d'assemblage comporte également en partie inférieure et au milieu de sa paroi externe, deux excroissances latérales en forme d'oreilles, complémentaires de celles des extrémités des nervures de rigidification de la semelle, et qui font office d'obturateur des parties évidées.

La pièce d'assemblage comporte enfin une butée centrale médiane issue de sa paroi interne en "U". Cette butée limite la pénétration de la pièce d'assemblage dans chacun des deux éléments de caniveau raccordés.

Selon une variante de l'invention, la butée centrale peut être remplacée par un joint élastomère encastré dans une rainure centrale ménagée au centre de la paroi interne en "U", en lieu et place de la butée. Ainsi les deux extrémités des éléments de caniveau, après encliquetage de leur annelure respective sur le bossage correspondant de la pièce d'assemblage, sont maintenues en compression contre le joint et réalisent un raccordement étanche.

Le procédé d'assemblage décrit pour la pièce d'assemblage peut être extrapolé à des pièces de fonction différente telles que les naissances d'évacuation, les pièces de piquage, les fonds, etc.

Dans le cas d'une naissance d'évacuation, l'écartement entre les bossages est nettement agrandi par rapport à la pièce d'assemblage précédemment décrite, afin d'accueillir latéralement et verticalement l'orifice d'une canalisation d'évacuation des eaux ou un passage dérivé de câbles. La butée centrale est alors supprimée et peut être remplacée par des butées parallèles disposées de part et d'autre de l'orifice.

Dans le cas d'un fond, les bossages sont alors issus de l'une des faces, côté conduit d'écoulement du caniveau, et sont encliquetés, comme décrit précédemment, dans les annelures d'extrémité correspondantes de l'élément de caniveau à obturer.

Ainsi grâce à un procédé simple d'assemblage d'éléments de caniveau annelés et à l'aide de pièces d'assemblage rapide à mettre en oeuvre, il est possible d'obtenir un caniveau de grande longueur dont le nombre de pièces requises pour sa mise en oeuvre est extrêmement réduit, même si la configuration du terrain impose une pente pour l'écoulement des eaux.

D'autres détails et avantages de l'invention apparaîtront à la lecture qui va suivre d'un exemple non limitatif de l'invention faisant référence aux dessins annexés parmi lesquels :
la figure 1 est une vue en perspective d'un élément de caniveau de drainage conforme à l'invention,
la figure 2 est une vue de côté d'une feuillure ondulée,
la figure 3 est une coupe selon A-A de la figure 2,
la figure 4 est une coupe d'une feuillure de type classique,
la figure 5 est une coupe d'un profilé fermé extrudé et annelé avant la découpe longitudinale,
la figure 6 est une vue en perspective matérialisant la coupe longitudinale permettant l'obtention de deux éléments de caniveau sans pente,
la figure 7 est une vue identique à la figure 6 mais pour l'obtention de deux éléments de caniveau à pente,
la figure 8 est une représentation d'un système complet de caniveau à pente constitué d'éléments de caniveau suivant l'invention,
la figure 9 est une vue en perspective d'un élément de caniveau annelé conforme à l'invention,
la figure 10 : est une vue en perspective d'une barrette de fixation,
les figures 11a et 11b : sont des vues en perspective d'un élément de caniveau dont une barrette est en cours de pose (11a) alors que l'autre est déjà posée (11b),
les figures 12a et 12b : sont des vues similaires à celle de la figure 3 mais présentant la pose de barrettes sur une variante de feuillure métallique,
la figure 13 est une vue en coupe de la grille de surface mise en oeuvre et verrouillée sur le caniveau,
la figure 14 est une vue en perspective montrant la coupe transversale des annelures d'extrémité et un détail de l'évidement de la semelle d'un élément de caniveau,
la figure 15 est une vue en perspective d'une pièce d'assemblage conforme à l'invention et munie d'une butée centrale,
la figure 16 est une vue similaire à la figure 3, mais la butée centrale est remplacée par un joint élastomère,
la figure 17 est une vue en perspective de deux éléments de caniveau en cours d'assemblage,
les figures 18-19 sont des vues en perspective de pièces accessoires mettant en oeuvre le procédé suivant l'invention.

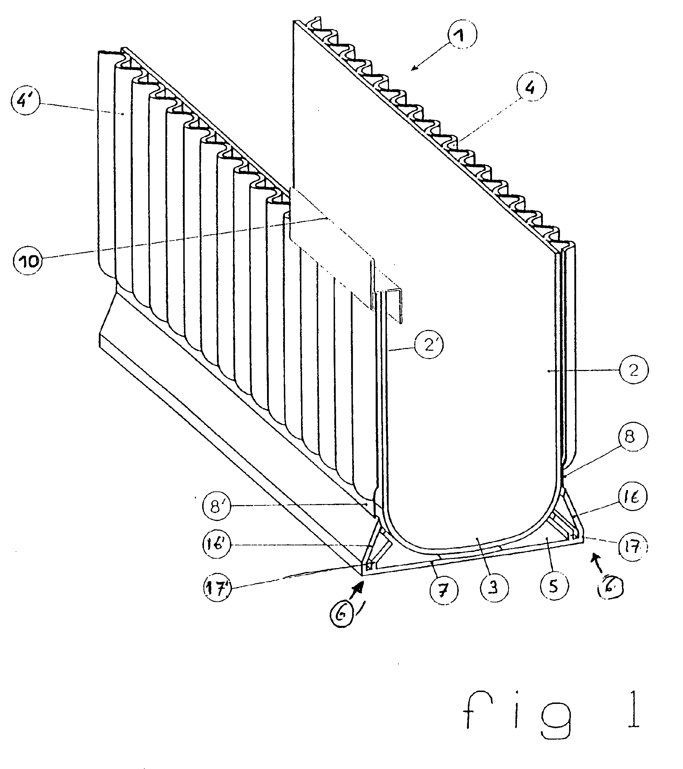

L'élément de caniveau extrudé 1 représenté sur la figure 1 est destiné à la réalisation d'un caniveau de drainage enterré. Il se présente sensiblement sous la forme d'un conduit en "U" constituant le corps 1 du caniveau dont les branches 2-2' s'étendent verticalement, et dont le fond 3 est arqué.

Les branches 2-2' sont lisses mais revêtues extérieurement d'annelures 4, 4' à savoir d'ondulations, qui sont ménagées verticalement sur une partie de la hauteur des faces extérieures des dites branches. Ces ondulations 4, 4' sont ouvertes en partie haute et fermées en partie basse pour tenir compte des contraintes de fabrication. Toutefois l'on pourrait sans faire novation prévoir d'ouvrir ou de fermer ces extrémités.

La semelle du caniveau est constituée d'une zone d'appui 5 qui s'étend sous toute la longueur du fond 3 dépourvu d'annelures et sert d'assise pour le caniveau dans le fond de tranchée. Cette plaque de base ou zone d'appui formant semelle 5 est constituée de deux extrémités saillantes 6-6' comprenant chacune une nervure de rigidification 16-16' partant en oblique du dessous de la partie inférieure des branches verticales 2-2' du "U" jusqu'à une paroi horizontale 7 formant appui au sol. Ces extrémités 6-6' ménagent avec les parties inférieures desdites branches verticales 2-2' deux embrèvements latéraux 8-8' qui, après coulage et solidification de béton dans la tranchée autour du caniveau, servent à maintenir fermement ce dernier et à lui éviter tout déplacement dû aux contraintes engendrées à partir de la surface du sol par le passage des véhicules notamment.

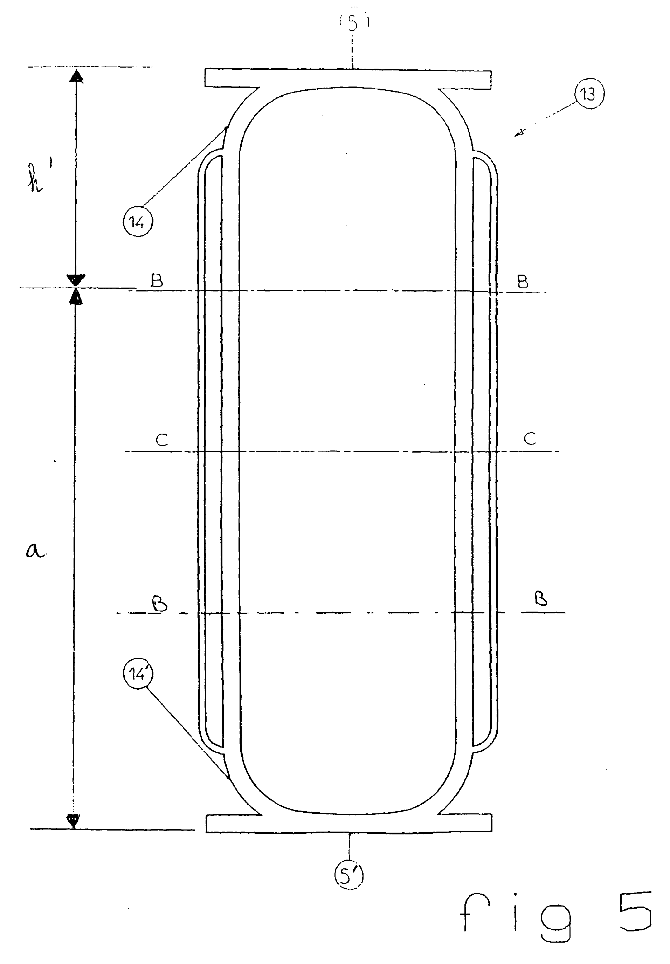

Afin de rigidifier la zone d'appui du caniveau, il est prévu des entretoises 17-17' reliant le fond 3 du caniveau à la paroi horizontale 7 d'appui au sol. Toutefois l'on pourrait également en variante et comme représenté sur la figure 5, envisager une zone d'appui massive formant semelle 5-5', c'est-à-dire non cloisonnée intérieurement, avec toutefois les inconvénients inhérents au coût de la matière supplémentaire requise.

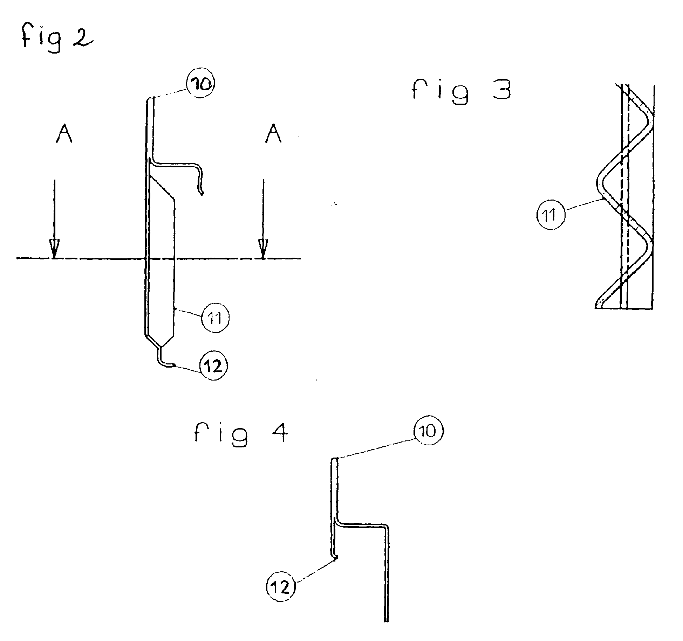

Le caniveau qui est obtenu par extrusion d'une matière thermoplastique, en PVC dans le présent exemple, reçoit de manière connue en soi sur les bords supérieurs de ses branches une feuillure métallique 10 de maintien d'une grille de surface. Cette feuillure en forme de "h" est obtenue par pliage d'une feuille métallique. Elle peut être ondulée sur au moins l'une de ses ailes inférieures 11 comme représenté sur les figures 2 ou 3, et reprendre alors sur une certaine surface de la branche verticale adjacente 2-2' les efforts de flambage induits par les sollicitations mécaniques du produit in situ. Elle peut être également et comme représenté sur les figures 1 et 4, de type classique, c'est-à-dire sans ondulation. Dans ce cas, elle vient pincer l'extrémité supérieure côté conduit de la branche verticale adjacente et enserrer les parties saillantes vers l'extérieur des annelures 4-4'. A cette fin l'extrémité inférieure côté annelures de la feuillure 10 est dotée d'un pli longitudinal 12 évitant toute extraction accidentelle après pose.

Pour la fabrication d'un caniveau conforme à l'invention, il est fait appel et comme représenté sur la figure 5, à un profilé fermé 13 sensiblement de forme ovale et muni en partie supérieure et inférieure d'une zone d'appui formant semelle 5-5' adjacente.

Le profilé 13 doté des semelles adjacentes 5-5' est obtenu par extrusion de PVC, puis annelé en sortie de l'extrudeuse à l'aide d'une chenille sur au moins une partie des côtés latéraux du profilé. Le profilé 13 est ensuite découpé longitudinalement comme représenté sur les figures 5 à 7, en deux éléments de caniveau 14-14' qui sont alors coupés transversalement à la longueur souhaitée.

La découpe longitudinale peut s'effectuer par tout moyen approprié aux matières thermoplastiques. Dans le présent exemple il a été fait appel à une scie (non représentée) asservie à la vitesse d'extrusion du profilé.

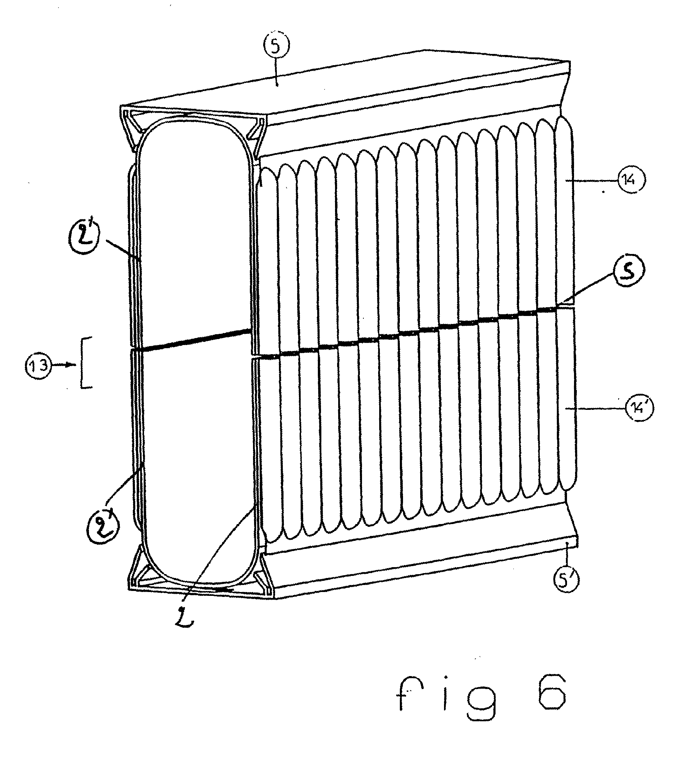

Sur la figure 6, le trait de scie S est effectué parallèlement aux plans des deux zones d'appui formant semelle 5-5'. L'on obtient alors deux éléments de caniveau 14-14' sans pente puisque les branches verticales 2-2' présentent une hauteur constante.

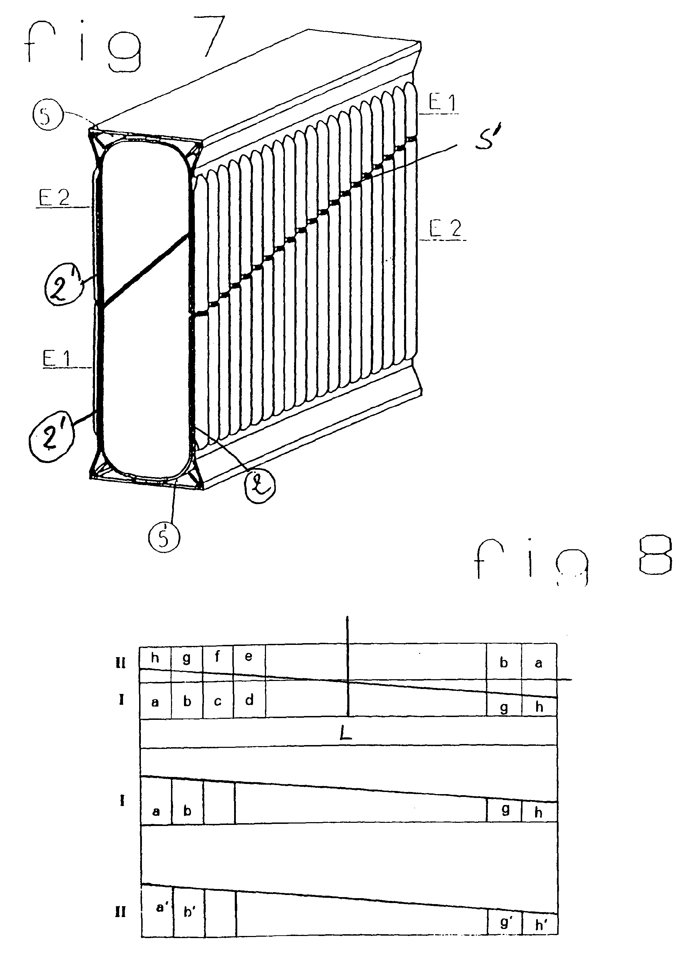

Sur la figure 7, le trait de scie S' est effectué obliquement par rapport aux plans des deux zones d'appui formant semelle 5-5', c'est-à-dire que la scie se déplace latéralement d'une position médiane vers une position latérale optimale. La pente ainsi réalisée découle de la différence de hauteur entre les extrémités des branches d'entrée E1 et de sortie E2 du caniveau et dès lors que ces branches verticales 2-2' affleurent la surface du sol.

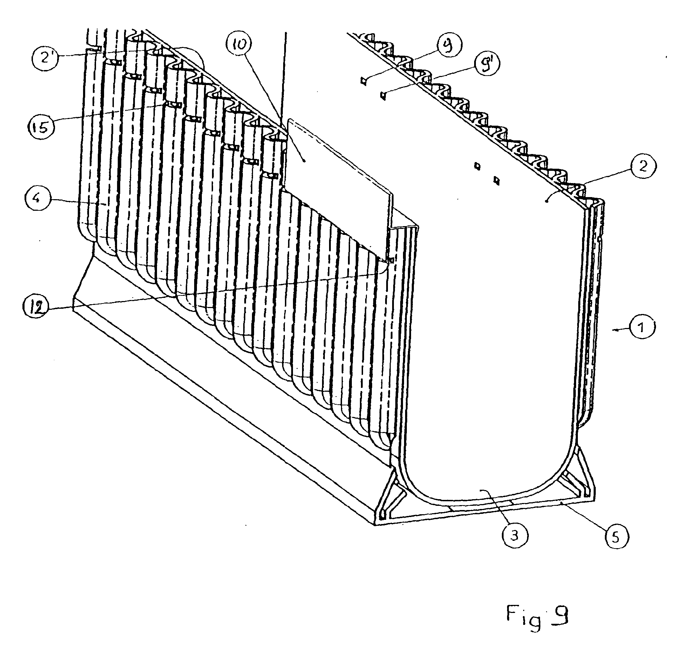

On a représenté sur la figure 5 les traces B-B et C-C des traits de coupe respectivement en position optimale et médiane correspondant aux hauteurs extrêmes et moyennes de deux éléments de caniveau identiques (a_{I}-a_{II}, b_{I}-b_{II},..., h_{I}-h_{II}) représentés en position linéaire dans un système complet de deux caniveaux à pente I et II selon la figure 8.

Lorsque la scie longitudinale se déplace de la position médiane C-C vers la position optimale B-B et que l'on recoupe transversalement en longueur standard les deux éléments séparés constitutifs du profilé fermé, on recompose, par adjonction des éléments accouplés selon la figure 8, deux linéaires de caniveau à pente de longueur L constitués des éléments unitaires "a_{I}" à "h_{I}" sur le premier linéaire et "a_{II}" à "h_{II}" pour le deuxième linéaire.

Comme il va de soi, l'invention n'est pas limitée à l'exemple de réalisation de l'élément précédemment cité ; elle en embrasse au contraire toutes les variantes d'exécution. C'est ainsi que la surface intérieure du profilé 13 pourrait présenter une section hemi-elliptique, ou que l'on pourrait faire appel à une combinaison de matières thermoplastiques différentes, voire pour certaines couches à l'utilisation de plastique recyclé.

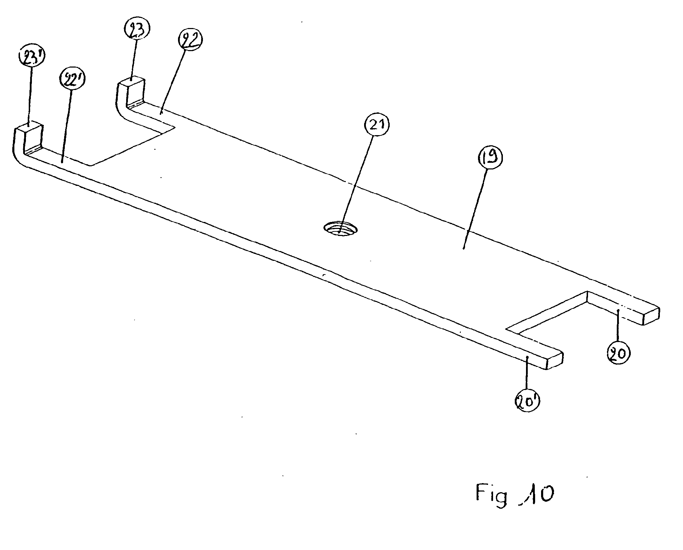

L'élément de caniveau extrudé représenté sur la figure 9 est similaire à celui de la figure 1 et les mêmes éléments sont indiqués avec les mêmes références.

Une feuillure 10 en forme de "h" obtenue par pliage d'une feuille métallique vient pincer l'extrémité supérieure côté conduit de la branche verticale adjacente 2 et enserrer les parties saillantes vers l'extérieur des annelures 4. On remarque notamment que les annelures 4 ont été tronquées côté externe par un rainurage longitudinal 15. Ce rainurage 15, et comme représenté sur les figures 9, 11 et 12, est parallèle au trait de coupe S, S' pratiqué lors du sciage longitudinal de l'extrémité supérieure des branches 2-2' du caniveau pour séparer le profilé extrudé fermé 13 en deux éléments de caniveau 14-14' identiques ou complémentaires. Il permet l'encliquetage d'un pli longitudinal 12 ménagé sur l'extrémité inférieure côté annelures 4 de la feuillure métallique 10.

Pour l'obtention d'un tel rainurage 15 conjointement au trait de coupe S, S' longitudinal pratiqué sur l'extrémité des branches 2-2' du caniveau, il est fait appel à un train de scies dont les deux lames effectuant le rainurage 15 sont disposées de part et d'autre de la lame traversante réalisant le sciage longitudinal de l'extrémité des branches 2-2' du caniveau.

Afin d'éviter de trop fragiliser les annelures 4 lors du rainurage, les lames de scie pratiquent dans celles-ci un évidement de l'ordre de 2 à 5 mm sur une profondeur de l'ordre de 5 mm.

Comme représenté sur les figures 9, 11a, 11b, 12a et 12b des séries de trous ou lumières traversants 9-9' sont prévues ponctuellement sur chaque branche 2-2' au débouché de certaines des ouvertures réalisées dans les annelures 4 lors du rainurage longitudinal 15. Elles sont disposées en vis à vis de trous ou lumières 9-9' sur l'autre branche 2-2' afin d'accueillir une barrette de fixation 19 verrouillable à la grille de surface et aux branches 2-2' du caniveau. Elles sont obtenues par poinçonnage, à partir de l'extérieur du conduit, de la paroi interne de l'élément de caniveau et à travers le rainurage 15 préalablement réalisé sur les annelures 4.

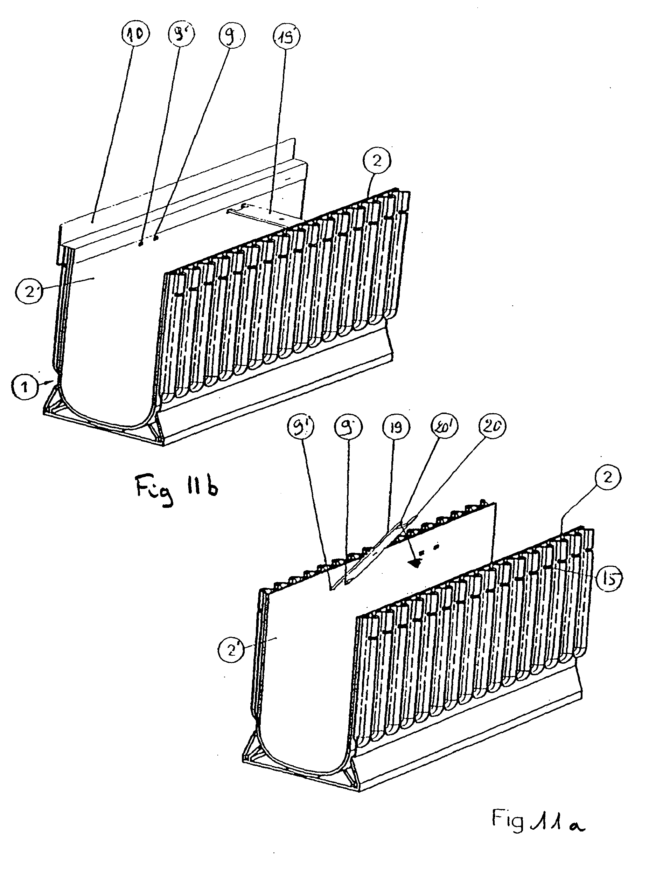

Comme représenté sur la figure 10, la barrette 19 est constituée d'un plat métallique comportant un orifice taraudé 21 en son centre. Cette barrette 19 est munie sur ses extrémités transversales d'ergots jumelés 20-20' et 22-22' correspondants aux trous ou lumières 9-9', et qui sont disposés dans un même plan horizontal en prolongement de celui de la barrette 19. Ces ergots 20-20' et 22-22' sont conçus de telle manière que leurs dimensions et écartements correspondent à ceux des trous et lumières 9-9' prévus sur les branches 2-2'.

Selon une particularité de l'invention, deux ergots 22-22' d'une même barrette 19 présentent un pliage d'extrémité 23-23' à 90° vers le haut, alors que les deux ergots 20-20' de l'autre extrémité sont droits. Toutefois l'on pourrait tout à fait envisager de prévoir que les quatre ergots d'une même barrette soient repliés à 90° vers le haut, ou que des bossages remplacent les pliages d'extrémité 23-23'.

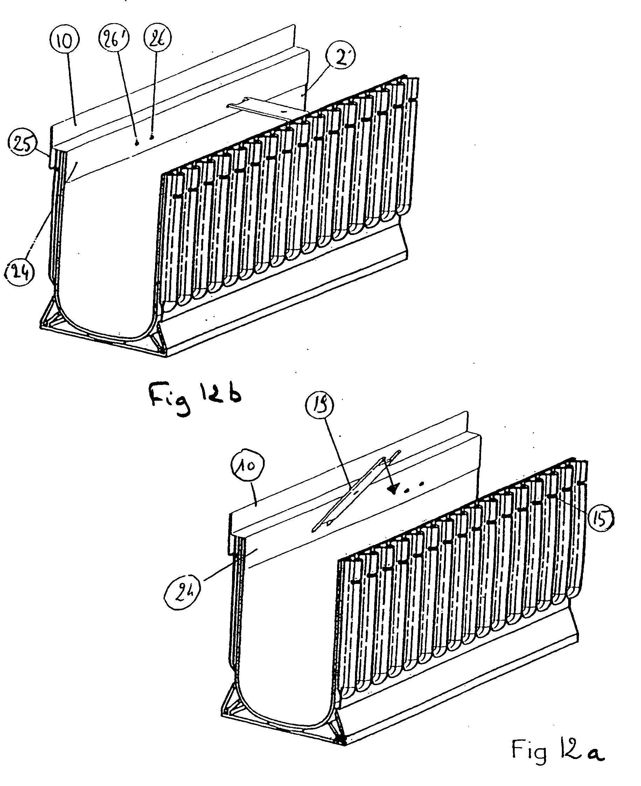

Comme représenté sur la figure 11b, une barrette 19 est déjà mise en oeuvre entre les deux branches 2-2' d'un élément de caniveau muni pour la compréhension d'une feuillure 10 sur la seule branche 2' alors que sur la figure 11a, une deuxième barrette 19 est en cours de pose. Les ergots 22-22' sont non visibles car déjà introduits dans les trous ou lumières 9-9'. La flèche indique la rotation en position horizontale qu'effectue la barrette 19 de sorte que les ergots jumelés 20-20' du côté opposé de la barrette 19 puissent être introduits par translation dans la série de trous ou lumières non visibles prévus en vis à vis dans l'autre branche 2 de l'élément de caniveau.

En variante et comme représenté sur les figures 12a et 12b, la feuillure métallique 10 comporte une aile 24 côté intérieur au conduit, plus large que l'aile 25 côté extérieur. L'aile 24 est alors munie de séries de trous ou lumières 26-26' correspondant aux trous et lumières 9-9' ménagés sur la branche 2'. Il en est de même pour la feuillure 10 disposée sur l'autre branche 2 du caniveau. La barrette 19 vient ainsi s'engager par ses ergots d'extrémité 20,20' et 22, 22' dans les orifices ménagés dans la feuillure 10 et dans la branche 2-2'. La feuillure 10 est alors maintenue sur l'extrémité des branches 2,2' du caniveau intérieurement par l'action de la barrette 19 et extérieurement par le rainurage 15, ce qui renforce considérablement la résistance à l'arrachement lors du passage des charges roulantes de surface.

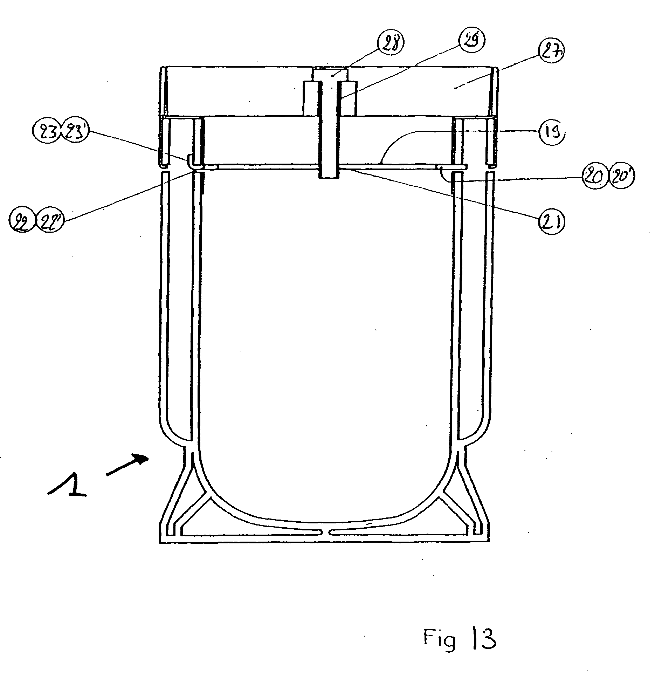

On a représenté sur la figure 13 le mode de verrouillage d'un tel ensemble : élément de caniveau 1, barrette 19, grille de surface 27.

Une vis 28 vient traverser un trou lisse 29 disposé au milieu de la grille 27 et vient se visser à partir de la surface du sol dans le trou taraudé central 21 de la barrette 19. Les ergots 20-20' et 22-22', disposés dans leurs trous ou lumières respectifs, sont alors tirés vers le haut par le vissage central et fermement verrouillés dans leurs logements grâce à la présence des pliages 23-23' ou bossages précédemment décrits.

Pour le démontage ultérieur de la grille 27, le dévissage de la vis 28 permet de libérer cette dernière mais n'affecte pas le positionnement des barrettes 19 qui restent en place dans leurs logements.

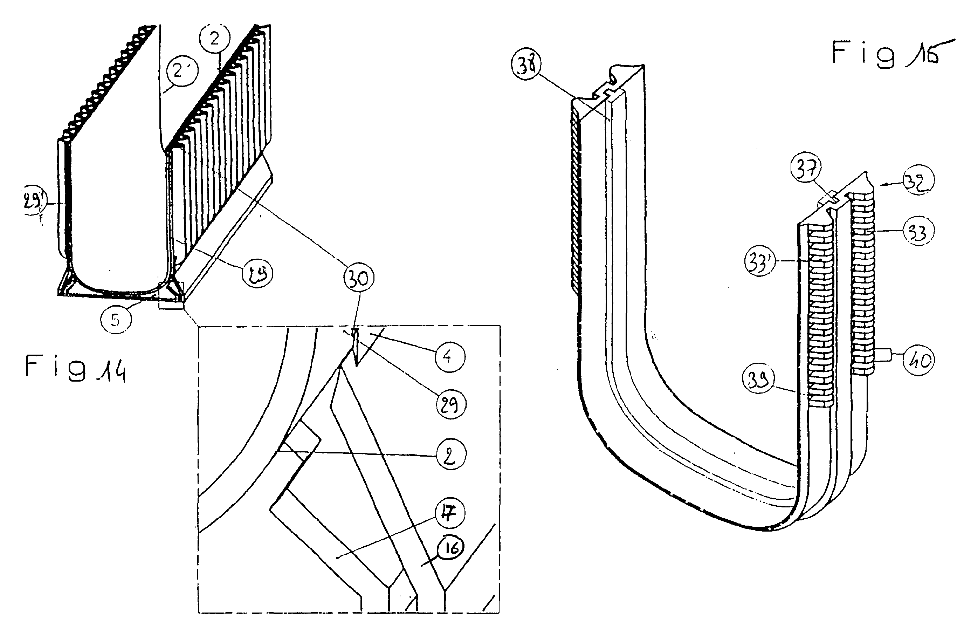

Comme le révèle une observation de la figure 14, l'extrémité de la double paroi externe de chaque paroi verticale est scié transversalement pour désolidariser la paroi annelée 4 de la paroi interne du caniveau formant branches 2-2' du caniveau. On crée ainsi une ouverture 29-29' de l'ordre de 2 à 3 mm donnant accès à une chambre creuse 30 ménagée à l'intérieur de la double paroi, dans laquelle vient s'encliqueter l'un des bossages 33-33' d'une pièce d'assemblage 32.

On remarque également sur une vue grossie d'une partie de la figure 14 que les évidements des extrémités des nervures de rigidification 16-16' de la double paroi de la zone d'appui formant semelle 5 du caniveau, ainsi que de la partie inférieure des annelures d'extrémité 4 sont obtenus par un détourage extérieur, de l'ordre de 15 à 20 mm de profondeur, de la paroi interne sur chaque face sciée transversalement et écartée. Ce détourage est réalisé par une deuxième scie.

On a représenté sur la figure 15 une pièce d'assemblage 32 conforme à l'invention et qui présente une forme en "U" complémentaire de la paroi lisse côté extérieur de la paroi interne de l'élément de caniveau pour faciliter le collage ultérieur. La pièce d'assemblage 32 est réalisée dans le présent exemple en PVC et comporte un double bossage droit et gauche 33-33' ménagé sur le côté extérieur de la forme en "U", sensiblement sur la moitié supérieure des parties verticales. Ces bossages 33-33' sont destinés à venir s'encliqueter, à travers les ouvertures 29-29' pratiquées dans les annelures d'extrémité, plus précisément dans la chambre creuse 30 interne à la double paroi. A cette fin, un chanfrein d'entrée 34-34' facilite l'introduction du bossage adjacent 33-33' dans l'annelure de l'élément de caniveau. Le verrouillage de la pièce d'assemblage 32, pendant le temps de séchage de la colle, est ainsi assuré par les formes mâles encliquetées dans les annelures correspondantes.

Comme représenté sur les figures 15 et 17, en partie inférieure et au milieu de sa paroi externe, la pièce d'assemblage 32 est dotée de deux excroissances latérales 35-35' en forme d'oreilles, complémentaires de celles des extrémités de la zone d'appui formant semelle 5. Ces excroissances 35, 35' font office d'obturateur des parties évidées après mise en place de la pièce d'assemblage 32 à l'extrémité de l'élément de caniveau.

La pièce d'assemblage 32 comporte également une butée centrale médiane 36 issue de sa paroi interne en "U". On remarque sur la figure 17 que la butée 36 limite la pénétration de la pièce d'assemblage 32 dans l'élément de caniveau 1 et assure les mêmes fonctions pour l'élément de caniveau 1' prêt à être encliqueté.

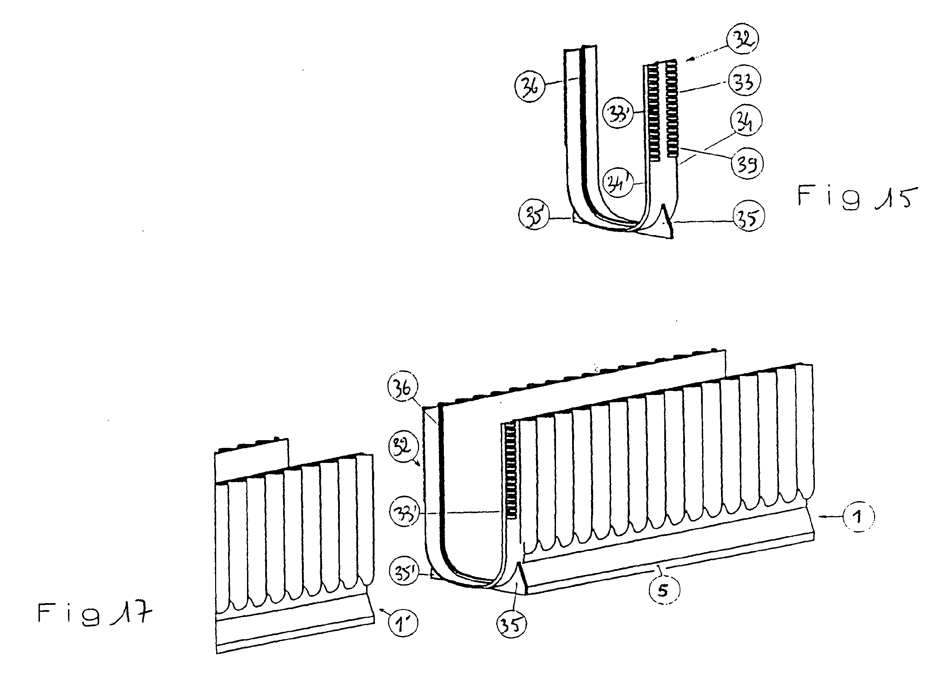

Selon une variante de l'invention et comme représenté sur la figure 16, la butée centrale a été remplacée par une rainure centrale 37 dans laquelle on vient encastrer un joint élastomère 38. Après encliquetage des deux éléments de caniveau 1-1' sur la pièce d'assemblage 32, l'ensemble ainsi constitué est maintenu en compression contre le joint 38 et permet l'obtention d'un raccordement étanche tant vis à vis des eaux canalisées que des eaux pénétrantes. On obtient alors un raccordement dit à joint et dépourvu de tout collage.

On remarque enfin sur les figures 15 et 16 que les bossages 33-33' présentent dans leur hauteur toute une série d'encoches horizontales 39 découpant à intervalles réguliers chacun des deux bossages en de multiples sections 40. Il est ainsi possible de régler la hauteur des parties verticales de la pièce d'assemblage sur celle des branches 2-2' des éléments de caniveau adjacents. Cette opération peut être effectuée avant ou après la pose par tout moyen approprié du type sciage ou coupe.

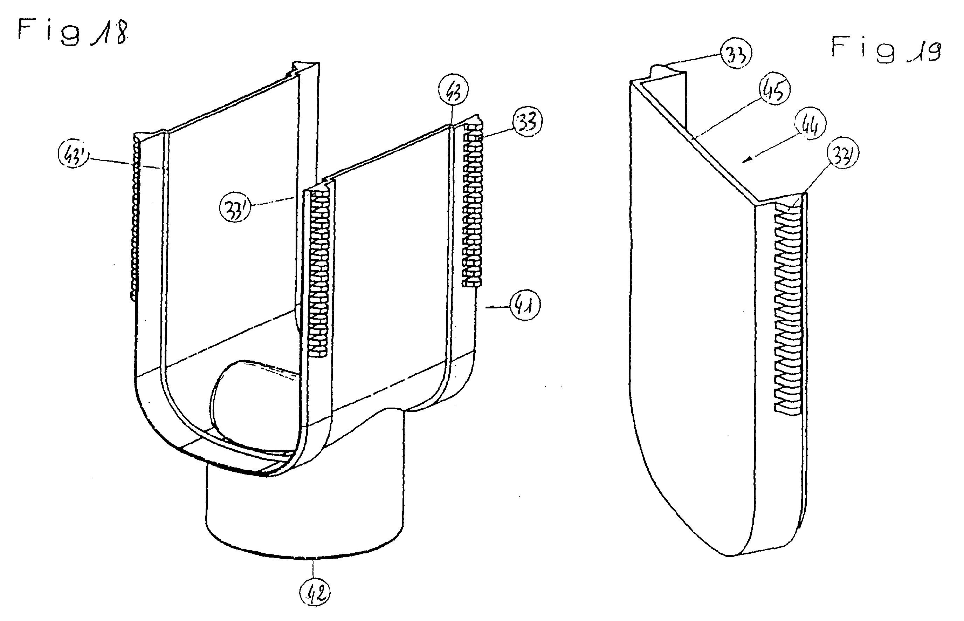

Pour la réalisation des pièces accessoires d'assemblage requises pour compléter le caniveau, on utilise et comme représenté sur les figures 18 et 19, des pièces complémentaires mettant en oeuvre le procédé d'assemblage tel que précédemment décrit.

Dans le cas d'une naissance d'évacuation 41 et comme représenté sur la figure 18, il est fait appel à une pièce en "U" dont l'écartement entre les bossages 33-33' est nettement agrandi afin d'accueillir latéralement ou verticalement l'orifice d'une canalisation d'évacuation 42. Deux butées parallèles 43-43' (raccord à coller) ou joints toriques (raccord à joint) sont alors disposées de part et d'autre de cet orifice et en lieu et place de la butée ou du joint central.

Dans le cas d'un fond 44 et comme représenté sur la figure 19, deux bossages 33-33' sont alors issus de la face côté conduit d'une plaque 45 reprenant sensiblement le profil du caniveau 1. Les bossages 33-33' sont encliquetés comme décrit précédemment dans les deux annelures d'extrémité de l'élément de caniveau à obturer.

Il va de soi que de nombreuses modifications peuvent être apportées par l'homme du métier à l'invention telle que définie par les revendications.

## Revendications

1. Elément en matière thermoplastique pour caniveau à pente selon l'écoulement des eaux ou pour chemin de câbles enterré, comprenant un corps (1) à section en forme de "U" dont les extrémités des branches sont agencées pour recevoir une feuillure (10) de maintien d'une grille (27), ledit corps (1) étant agencé pour être relié par une pièce d'assemblage au corps d'un élément de caniveau adjacent,
**caractérisé en ce que** le corps (1) du caniveau est constitué d'une double paroi extrudée, à savoir une paroi intérieure lisse rigide en "U" et une paroi extérieure ondulée, la paroi extérieure étant solidaire de la paroi intérieure, ladite paroi extérieure comportant en outre une zone d'appui formant semelle (5-5'), et les ondulations (4-4') étant disposées orthogonalement à la direction longitudinale du corps (1) sur une partie de la hauteur des branches extérieures (2-2') de la paroi extérieure à l'exception de ladite zone d'appui formant semelle (5-5').

2. Elément pour caniveau selon la revendication 1,
**caractérisé en ce que** la paroi ondulée comporte des ondulations de type rectangulaire présentant une alternance de parties planes et de parties courbes, ladite paroi ayant une épaisseur comprise entre 12 et 20 mm, le pas des ondulations étant compris entre 25 et 45 mm et la largeur d'une ondulation étant comprise entre 20 et 35 mm.

3. Elément pour caniveau selon l'une des revendications 1 et 2,
**caractérisé en ce que** la zone d'appui formant semelle (5-5') du corps (1) de l'élément de caniveau s'étend sous toute la longueur du corps (1) dépourvue d'ondulations (4-4') et forme avec les parois inférieures des branches extérieures (2-2') deux embrèvement latéraux (8-8').

4. Elément pour caniveau selon la revendication 3,
**caractérisé en ce que** la zone d'appui formant semelle (5-5') est constituée de deux extrémités saillantes (6-6') comprenant chacune une nervure de rigidification (16-16') partant en oblique du dessous de la partie inférieure des branches extérieures (2-2') du "U" et jusqu'à une paroi horizontale (7) formant appui au sol.

5. Elément pour caniveau selon la revendication 4,
**caractérisé en ce que** des entretoises (17, 17') relient le fond (3) du caniveau à la paroi horizontale (7) d'appui au sol.

6. Elément pour caniveau selon l'une quelconque des revendications 1 à 5,
**caractérisé en ce que** l'extrémité supérieure de chacune des branches extérieures (2-2') est recouverte d'une feuillure longitudinale (10), de préférence en forme de "h", qui vient pincer l'extrémité supérieure de la branche extérieure (2-2') et enserrer par un pli longitudinal (12) les parties saillantes vers l'extérieur des ondulations (4-4').

7. Elément pour caniveau selon la revendication 6,
**caractérisé en ce que** la feuillure (10) est ondulée sur au moins l'une de ses ailes inférieures (11).

8. Elément pour caniveau selon l'une quelconque des revendications 1 à 7,
**caractérisé en ce que** ses parois verticales sont découpées longitudinalement pour que la hauteur requise des deux branches (2-2') soit selon le cas égale ou différente entre leurs extrémités d'entrée (E1) et de sortie (E2), la différence dans le cas d'une pente étant de 0,5 à 0,8%.

9. Elément pour caniveau selon l'une des revendications 6 à 8,
**caractérisé en ce que** les branches extérieures (2-2') du corps de l'élément de caniveau (1) sont dotées, côté ondulations (4) externes, d'une rainure longitudinale (15) pour l'encliquetage d'un pli longitudinal (12) ménagé sur l'extrémité inférieure côté ondulations de la feuillure (10), et **en ce que** des séries de trous ou lumières traversants (9-9') sont prévus sur chaque branche extérieure (2-2') au débouché de certaines des ouvertures réalisées dans les ondulations (4) lors du rainurage longitudinal, lesdits trous ou lumières étant disposés ponctuellement et en vis à vis afin d'accueillir une barrette (19) de fixation verrouillable mécaniquement à la grille de surface (27).

10. Elément pour caniveau selon la revendication 9,
**caractérisé en ce que** les rainures longitudinales (15) sont obtenues par un train de scies dont les deux lames effectuant le rainurage sont disposées de part et d'autre d'une lame traversante réalisant le sciage longitudinal de l'extrémité des branches du corps de l'élément pour caniveau.

11. Elément pour caniveau selon l'une des revendications 9 et 10,
**caractérisé en ce que** les trous ou lumières traversants (9-9') sont obtenus par poinçonnage, à partir de l'extérieur du conduit, de la paroi intérieure du corps de l'élément pour caniveau et à travers le rainurage (15) préalablement réalisé sur les ondulations (4).

12. Elément pour caniveau selon la revendication 11,
**caractérisé en ce que** les feuillures (10) comportent une aile (24) côté intérieur au conduit, plus large que l'aile (25) côté extérieur, et qui est munie de séries de trous ou lumières (26-26') correspondant aux trous ou lumières (9-9') ménagés sur la branche extérieure (2-2').

13. Elément pour caniveau selon l'une quelconque des revendications 9 à 12,
**caractérisé en ce que** la barrette de fixation (19) est constituée d'un plat métallique muni sur ses extrémités transversales d'ergots jumelés (20-20') et (22-22'), disposés dans un même plan en prolongement de la barrette (19), et dont les dimensions et écartements correspondent à ceux des trous ou lumières (9-9') prévus sur les branches extérieures (2-2').

14. Elément pour caniveau selon la revendication 13,
**caractérisé en ce que** les deux ergots jumelés (22-22') présentent un pliage d'extrémité (23-23') à 90° vers le haut, alors que les deux ergots (20-20') de l'autre extrémité de la barrette (19) sont droits.

15. Elément pour caniveau selon la revendication 13,
**caractérisé en ce que** les quatre ergots d'une même barrette (19) présentent un pliage d'extrémité à 90° vers le haut.

16. Elément pour caniveau selon l'une des revendications 13 et 14,
**caractérisé en ce que** des bossages remplacent les pliages d'extrémité (23-23') des ergots.

17. Elément pour caniveau selon l'une quelconque des revendications 13 à 16,
**caractérisé en ce que** les ergots jumelés (22-22') de l'un des côtés de la barrette (19) sont introduits côté conduit, dans une série de trous ou lumières (9-9') préws dans l'une des branches extérieures (2') du corps (1), puis la barrette (19) est ramenée par rotation en position horwntale de sorte que les ergots jumelés (20-20') du côté opposé de ta barrette (19) puissent être introduits par translation horizontale dans la série de trous ou lumières (9-9') prévus en vis à vis dans l'autre branche extérieure (2) du corps (1).

18. Elément pour caniveau selon l'une des revendications 12 et 16,
**caractérisé en ce que** la barrette (19) comporte un trou taraudé (21) et la grille de surface (27) un trou lisse (29) disposés en leur milieu pour recevoir une vis centrale de fixation (28).

19. Procédé de fabrication du corps (1) d'un élément de caniveau selon l'une quelconque des revendications précédentes.
**caractérisé en ce qu'**on forme par extrusion un profilé fermé (13) à double paroi sensiblement de forme ovale, muni en partie supérieure et inférieure d'une zone d'appui adjacente formant semelle (5-5'), on forme sur la paroi extérieure, en sortie d'extrusion, à l'aide d'une chenille, des ondulations sur au moins une partie des côtés latéraux de la paroi extérieure, puis on découpe ledit profilé longitudinalement en deux éléments (14-14') qui sont ensuite coupés transversalement à la longueur souhaitée.

20. Procédé de fabrication du corps (1) d'un élément pour caniveau selon la revendication 19,
**caractérisé en ce qu'**après découpe longitudinale, les branches (2-2') des deux éléments (14-14') présentent une différence de hauteur entre leurs extrémités d'entrée (E1) et leurs extrémités de sortie (E2).

21. Procédé de fabrication du corps (1) d'un élément pour caniveau selon la revendication 20,
**caractérisé en ce qu'**une scie est asservie à la vitesse d'extrusion du profilé fermé (13) et se déplace latéralement d'une position médiane (C-C) vers une position optimale (B-B).

22. Procédé de fabrication du corps (1) d'un élément pour caniveau selon la revendication 19,
**caractérisé en ce qu'**après découpe longitudinale, les branches (2-2') des deux éléments (14-14') présentent une hauteur constante.

23. Procédé d'assemblage d'éléments pour caniveau selon l'une des revendications 4 à 18,
**caractérisé en ce que** l'extrémité de la double paroi externe ondulée de chaque paroi extérieure (2-2') est coupée transversalement pour désolidariser la paroi externe ondulée (4) de la paroi interne lisse du corps (1), **en ce que** les extrémités des nervures de rigidification (16, 16') de la zone d'appui formant semelle (5) du caniveau et de la partie inférieure des ondulations d'extrémité (4) contiguë à la semelle sont évidées, et **en ce qu'**une pièce d'assemblage (32) munie d'au moins une série de bossages (33,33') est introduite dans tes coupes et évidements ménagés sur les extrémités du corps (1).

24. Procédé d'assemblage salon la revendication 23,
**caractérisé en ce que** la coupe transversale pratiquée par sciage crée une ouverture donnant accès à une chambre creuse (30) ménagée à l'intérieur de la double paroi, dans laquelle vient s'encliqueter l'un des bossages (33, 33') de la pièce d'assemblage (32).

25. Procédé d'assemblage selon l'une des revendications 23 et 24,
**caractérisé en ce que** les évidements des extrémités des nervures de rigidification (16, 16') et de la partie inférieure des ondulations d'extrémité (4) sont obtenus par un détourage extérieur à l'aide d'une scie de la paroi interne en U sur chaque face sciée transversalement et écartée.

26. Kit de construction comportant deux éléments pour caniveau selon la revendication 4 et une pièce d'assemblage pour la mise en oeuvre du procédé selon l'une quelconque des revendications 23 à 25,
**caractérisé en ce que** ladite pièce d'assemblage (32) présente une forme complémentaire de la paroi lisse côté extérieur de la paroi interne du corps (1) de l'élément pour caniveau pour son collage éventuel contre cette paroi et est munie d'au moins une série de bossages (33, 33').

27. Kit de construction selon la revendication 26,
**caractérisé en ce que** l'épaisseur de ladite pièce d'assemblage (32) correspond sensiblement à celle de l'ouverture (29) ménagée par sciage dans les ondulations (4) lors de la coupe transversale du corps (1).

28. Kit de construction selon la revendication 27,
**caractérisé en ce que** ladite pièce d'assemblage (32) comporte en partie inférieure et au milieu de sa paroi externe, deux excroissances latérales (35, 35') en forme d'oreilles, complémentaires de celles des extrémités des nervures de rigidification (16, 16') de la zone d'appui formant semelle (5), et qui font office d'obturateur des parties évidées.

29. Kit de construction selon la revendication 28,
**caractérisé en ce que** ladite pièce d'assemblage (32) comporte un double bossage (33, 33') droit et gauche de forme complémentaire à celle des ondulations d'extrémité (4), ménagé sur le côté extérieur de la forme en "U" sensiblement sur la moitié supérieure des parties verticales.

30. Kit de construction selon la revendication 29,
**caractérisé en ce que** les bossages (33, 33') présentent dans leur hauteur toute une série, d'encoches horizontales (39) découpant à intervalles réguliers chacun des deux bossages en multiples sections (40).

31. Kit de construction selon l'une des revendications 29 et 30,
**caractérisé en ce que** ladite pièce d'assemblage (32) comporte une butée centrale médiane (36) issue de sa paroi interne en «U».

32. Kit de construction selon l'une des revendications 29 et 30,
**caractérisé en ce que** ladite pièce d'assemblage (32) comporte un joint élastomère (38) encastré dans une rainure centrale (37) ménagée au centre de la paroi interne en "U".

33. Kit de construction selon rune quelconque des revendications 26 à 32,
**caractérisé en ce que** fécartement entre les bossages (33, 33') est agrandi afin d'accueillir latéralement ou verticalement l'orifice d'une canalisation d'évacuation des eaux (42) ou un passage dérivé de câbles.

34. Kit de construction selon l'une quelconque des revendications 26 à 32,
**caractérisé en ce que** deux bossages (33, 33') sont issus de la face côté conduit d'une plaque (45) reprenant sensiblement le profil du corps (1) avec sa zone d'appui formant semelle (5), les bossages (33, 33') étant encliquetés dans les deux ondulations (4) d'extrémité du corps (1) à obturer.

## Claims

1. Element, formed from thermoplastics material, for a sloped channel for discharging water or for a buried conduit for cables, said element comprising a body (1) with a U-shaped cross-section, the ends of the arms of which are designed to accommodate a rebate (10) for supporting a grille (27), said body (1) being designed to be connected by an assembly part to the body of an adjacent channel element, **characterised in that** the body (1) of the channel is made up of a double extruded wall, namely a smooth, rigid, interior U-shaped wall and an undulatory exterior wall, the exterior wall being integral with the interior wall, said exterior wall comprising in addition a support zone forming a footing (5-5'), and the undulations (4-4') being disposed orthogonally to the longitudinal direction of the body (1) over a portion of the height of the exterior arms (2-2') of the exterior wall with the exception of said support zone which forms the footing (5-5').

2. Element for a channel according to claim 1, **characterised in that** the undulatory wall comprises undulations of the rectangular type, which have planar portions alternating with curved portions, said wall having a thickness of between 12 and 20 mm, the spacing between the undulations being between 25 and 45 mm, and the width of an undulation being between 20 and 35 mm.

3. Element for a channel according to one of claims 1 and 2, **characterised in that** the support zone which forms the footing (5-5') of the body (1) of the channel element extends under the whole length of the body (1) which is not provided with undulations (4-4'), and forms, with the lower walls of the exterior arms (2-2'), two lateral tongue-and-groove joints (8-8').

4. Element for a channel according to claim 3, **characterised in that** the support zone, which forms the footing (5-5'), is made up of two projecting ends (6-6'), each comprising a reinforcing groove (16-16'), which starts obliquely from the underneath of the lower portion of the exterior arms (2-2') of the "U" and goes as far as a horizontal wall (7) which forms the support on the ground.

5. Element for a channel according to claim 4, **characterised in that** struts (17, 17') connect the base (3) of the channel to the horizontal support wall (7) on the ground.

6. Element for a channel according to any of claims 1 to 5, **characterised in that** the upper end of each of the exterior arms (2-2') is covered with a longitudinal rebate (10), preferably h-shaped, which squeezes the upper end of the exterior arm (2-2') and grips, by a longitudinal bent portion (12), the portions protruding towards the outside of the undulations (4-4').

7. Element for a channel according to claim 6, **characterised in that** the rebate (10) is undulatory on at least one of its lower flanges (11).

8. Element for a channel according to any of claims 1 to 7, **characterised in that** its vertical walls are cut longitudinally so that the required height of the two arms (2-2') is, depending on the situation, equal or different between their inlet ends (E1) and outlet ends (E2), the difference in the case of a slope being between 0.5 and 0.8 %.

9. Element for a channel according to one of claims 6 to 8, **characterised in that** the exterior arms (2-2') of the body of the channel element (1) are provided, on the side with the external undulations (4), with a longitudinal groove (15) for clipping-in a longitudinal bent portion (12) provided on the lower end on the undulations side of the rebate (10), and **in that** series of through-holes or through-openings (9-9') are provided on each exterior arm (2-2') at the outlet of some of the apertures provided in the undulations (4) during the longitudinal grooving, said holes or openings being disposed at certain points and opposite in order to receive a fixing bar (19), which is mechanically lockable to the surface grille (27).

10. Element for a channel according to claim 9, **characterised in that** the longitudinal grooves (15) are produced by a series of saws, the two blades of which, effecting the grooving, are disposed on each side of a through-blade, which is carrying out the longitudinal sawing of the end of the arms of the body of the element for a channel.

11. Element for a channel according to one of claims 9 and 10, **characterised in that** the through-holes or through-openings (9-9') are produced by punching, starting from the outside of the conduit, the interior wall of the body of the element for a channel and through the grooving (15) previously carried out on the undulations (4).

12. Element for a channel according to claim 11, **characterised in that** the rebates (10) comprises a flange (24) on the interior side on the conduit, wider than the flange (25) on the exterior side, and which is provided with series of holes or openings (26-26'), corresponding to the holes or openings (9-9') provided on the exterior arm (2-2').

13. Element for a channel according to any of claims 9 to 12, **characterised in that** the fixing bar (19) is made up of a metal dish provided on its transverse ends with twin lugs (20-20') and (22-22'), which are disposed in one and the same plane as an extension of the bar (19), and the dimensions and spacings of which correspond to those of the holes or openings (9-9') provided on the exterior arms (2-2').

14. Element for a channel according to claim 13, **characterised in that** the two twin lugs (22-22') have an end fold (23-23') at 90° upwardly, while the two lugs (20-20') of the other end of the bar (19) are straight.

15. Element for a channel according to claim 13, **characterised in that** the four lugs of one and the same bar (19) have an end fold at 90° upwardly.

16. Element for a channel according to one of claims 13 and 14, **characterised in that** bosses replace the end folds (23-23') of the lugs.

17. Element for a channel according to any of claims 13 to 16, **characterised in that** the twin lugs (22-22') of one of the sides of the bar (19) are introduced, conduit side, into a series of holes or openings (9-9') provided in one of the exterior arms (2') of the body (1), then the bar (19) is brought by rotation into the horizontal position so that the twin lugs (20-20') of the opposite side of the bar (19) can be introduced by horizontal movement into the series of holes or openings (9-9') provided opposite in the other exterior arm (2) of the body (1).

18. Element for a channel according to one of claims 12 and 16, **characterised in that** the bar (19) includes a threaded hole (21), and the surface grille (27) includes a smooth hole (29), which holes are disposed in their middle so as to accommodate a central fixing screw (28).

19. Method of manufacturing the body (1) of a channel element according to any of the preceding claims, **characterised in that** a closed profile (13) is formed by extrusion, said profile having a double wall of substantially oval shape, and being provided in the upper and lower portions with an adjacent support zone which forms a footing (5-5'), undulations are formed, on the exterior wall, at the extrusion outlet, by means of a caterpillar, on at least one portion of the lateral sides of the exterior wall, then said profile is cut longitudinally into two elements (14-14'), which are then cut transversely to the desired length.

20. Method of manufacturing the body (1) of an element for a channel according to claim 19, **characterised in that**, after being cut longitudinally, the arms (2-2') of the two elements (14-14') have a difference in height between their inlet ends (E1) and their outlet ends (E2).

21. Method of manufacturing the body (1) of an element for a channel according to claim 20, **characterised in that** a saw is controlled at the extrusion speed of the closed profile (13), and is displaced laterally from a median position (C-C) towards an optimum position (B-B).

22. Method of manufacturing the body (1) of an element for a channel according to claim 19, **characterised in that**, after being cut longitudinally, the arms (2-2') of the two elements (14-14') have a constant height.

23. Method of assembling elements for a channel according to one of claims 4 to 18, **characterised in that** the end of the undulatory external double wall of each exterior wall (2-2') is cut transversely to detach the undulatory external wall (4) from the smooth internal wall of the body (1), **in that** the ends of the reinforcing grooves (16, 16') of the support zone which forms a footing (5) of the channel and of the lower portion of the end undulations (4) contiguous with the footing are cut-away, and **in that** an assembly part (32), provided with at least one series of bosses (33, 33'), is introduced into the cuts and cut-away portions provided on the ends of the body (1).

24. Method of assembly according to claim 23, **characterised in that** the transverse cut, produced by sawing, creates an aperture which gives access to a hollow chamber (30) provided inside the double wall, into which chamber is clipped one of the bosses (33, 33') of the assembly part (32).

25. Method of assembly according to one of claims 23 and 24, **characterised in that** the cut-away portions of the ends of the reinforcing grooves (16, 16') and of the lower portion of the end undulations (4) are obtained by an exterior turning, by means of a saw, of the internal U-shaped wall onto each face transversely sawn and spaced.

26. Construction kit comprising two elements for a channel according to claim 4 and an assembly part for carrying out the method according to any of claims 23 to 25, **characterised in that** said assembly part (32) has a shape which is complementary to the smooth wall, on the exterior side, of the internal wall of the body (1) of the element for a channel, for its possible gluing against this wall, and is provided with at least one series of bosses (33, 33').

27. Construction kit according to claim 26, **characterised in that** the thickness of said assembly part (32) corresponds substantially to that of the opening (29), provided by sawing, in the undulations (4) during the transverse cutting of the body (1).

28. Construction kit according to claim 27, **characterised in that** said assembly part (32) comprises, in the lower portion and in the middle of its external wall, two lateral projections (35, 35') which are in the form of ears, complementary to those of the ends of the reinforcing grooves (16, 16') of the support zone which forms the footing (5), and which perform the function of a blocking means for the cut-away portions.

29. Construction kit according to claim 28, **characterised in that** said assembly part (32) comprises a double right and left boss (33, 33'), of complementary shape to that of the end undulations (4), provided on the exterior side of the "U" shape, substantially on the upper half of the vertical portions.

30. Construction kit according to claim 29, **characterised in that** the bosses (33, 33') have, in their height, a whole series of horizontal notches (39), which cut at regular intervals each of the two bosses into multiple sections (40).

31. Construction kit according to one of claims 29 and 30, **characterised in that** said assembly part (32) includes a central median stop member (36) projecting from its U-shaped internal wall.

32. Construction kit according to one of claims 29 and 30, **characterised in that** said assembly part (32) includes an elastomeric joint (38), fitted in a central groove (37) provided in the centre of the U-shaped internal wall.

33. Construction kit according to any of claims 26 to 32, **characterised in that** the spacing between the bosses (33, 33') is enlarged in order to accommodate, laterally or vertically, the orifice of a water evacuation channel (42) or a branch passage for cables.

34. Construction kit according to any of claims 26 to 32, **characterised in that** two bosses (33, 33') emerge from the face on the conduit side of a plate (45), which replicates substantially the profile of the body (1) with its support zone which forms a footing (5), the bosses (33, 33') being clipped into the two end undulations (4) of the body (1) to be blocked.

## Patentansprüche

1. Thermoplastisches Element für eine Rinne mit einer Neigung entsprechend dem Wasserabfluss oder für einen in der Erde verlegten Kabelweg, umfassend einen Körper (1) mit einem U-förmigen Querschnitt, dessen Schenkelenden angeordnet sind, um ein Falzelement (10) zum Halten eines Rosts (27) aufzunehmen, wobei der Körper (1) angeordnet ist, um durch ein Verbindungsteil mit dem Körper eines anliegenden Rinnenelements verbunden zu werden, **dadurch gekennzeichnet, dass** der Rinnenkörper (1) durch eine extrudierte Doppelwand, nämlich eine steife, glatte, U-förmige Innenwand und eine mit Wellen versehene Außenwand gebildet ist, wobei die Außenwand mit der Innenwand fest verbunden ist, wobei die Außenwand ferner einen eine Sohle bildenden Abstützbereich (5-5') aufweist und die Wellen (4-4') orthogonal zu der Längsrichtung des Körpers (1) auf einem Teil der Höhe der Außenschenkel (2-2') der Außenwand mit Ausnahme des eine Sohle bildenden Abstützbereichs (5-5') angeordnet sind.

2. Rinnenelement nach Anspruch 1, **dadurch gekennzeichnet, dass** die mit Wellen versehene Wand rechteckförmige Wellen aufweist, die abwechselnd ebene und gewölbte Teile aufweisen, wobei die Wand eine Dicke zwischen 12 und 20 mm aufweist und wobei der Zwischenraum zwischen den Wellen zwischen 25 und 45 mm liegt und die Breite einer Welle zwischen 20 und 35 mm liegt.

3. Rinnenelement nach einem der Ansprüche 1 und 2, **dadurch gekennzeichnet, dass** der eine Sohle bildende Abstützbereich (5-5') des Körpers (1) des Rinnenelements sich auf der gesamten, keine Wellen (4-4') aufweisenden Länge des Körpers (1) erstreckt und mit den unteren Wänden der Außenschenkel (2-2') zwei Seitenversatze (8-8') bildet.

4. Rinnenelement nach Anspruch 3, **dadurch gekennzeichnet, dass** der eine Sohle bildende Abstützbereich (5-5') durch zwei vorspringende Enden (6-6') gebildet ist, die jeweils eine Versteifungsrippe (16-16') aufweisen, die schräg von dem unteren Bereich des unteren Teils der Außenschenkel (2-2') des U ausgeht und bis zu einer horizontalen Wand (7) reicht, die eine Bodenstütze bildet.

5. Rinnenelement nach Anspruch 4, **dadurch gekennzeichnet, dass** Streben (17, 17') den Boden (3) der Rinne mit der horizontalen, eine Bodenstütze bildenden Wand (7) verbinden.

6. Rinnenelement nach einem beliebigen der Ansprüche 1 bis 5, **dadurch gekennzeichnet, dass** das obere Ende der jeweiligen Außenschenkel (2-2') von einer vorzugsweise h-förmigen Längsfalz (10) überdeckt ist, die das obere Ende des Außenschenkels (2-2') klemmt und die vorspringenden Teile zu dem Außenbereich der Wellen (4-4') hin mit einer Längsfalte (12) einspannt.

7. Rinnenelement nach Anspruch 6, **dadurch gekennzeichnet, dass** die Falz (10) auf mindestens einem ihrer unteren Flügel (11) gewellt ist.

8. Rinnenelement nach einem beliebigen der Ansprüche 1 bis 7, **dadurch gekennzeichnet, dass** seine vertikalen Wände in der Längsrichtung geschnitten sind, damit die erforderliche Höhe der zwei Schenkel (2-2') je nachdem gleich oder unterschiedlich zwischen deren Eintritts- (E1) und Austrittsenden (E2) ist, wobei der Unterschied im Fall einer Neigung 0,5 bis 0,8 % beträgt.

9. Rinnenelement nach einem der Ansprüche 6 bis 8, **dadurch gekennzeichnet, dass** die Außenschenkel (2-2') des Körpers des Rinnenelements (1) auf der Seite der Außenwellen (4) mit einer Längsnut (15) für das Einrasten einer auf dem unteren Ende auf der Seite der Wellen des Falzes (10) ausgebildeten Längsfalte (12) versehen sind und dass Reihen von durchgehenden Löchern oder Öffnungen (9-9') auf jedem Außenschenkel (2-2') an dem Ausgang mancher der in den Wellen (4) bei der Bildung der Längsnut realisierten Öffnungen vorgesehen sind, wobei die Löcher oder Öffnungen punktuell und einander gegenüber angeordnet sind, um eine mechanisch an dem Oberflächenrost (27) verriegelbare Befestigungsleiste (19) aufzunehmen.

10. Rinnenelement nach Anspruch 9, **dadurch gekennzeichnet, dass** die Längsnuten (15) durch einen Sägesatz erzielt werden, dessen zwei, die Nutbildung durchführenden Blätter beidseitig eines durchquerenden Blatts angeordnet sind, das das Längssägen des Endes der Schenkel des Körpers des Rinnenelements durchführt.

11. Rinnenelement nach einem der Ansprüche 9 und 10, **dadurch gekennzeichnet, dass** die durchgehenden Löcher oder Öffnungen (9-9') durch Lochstanzen der Innenwand des Körpers des Rinnenelements von dem Außenbereich des Kanals aus und durch die zuvor auf den Wellen (4) realisierte Nut (15) gebildet werden.

12. Rinnenelement nach Anspruch 11, **dadurch gekennzeichnet, dass** die Falze (10) einen Flügel (24) auf der Innenseite des Kanals aufweisen, welcher breiter ist als der außenseitige Flügel (25) und mit Reihen von Löchern oder Öffnungen (26-26') versehen ist, die den Löchern oder Öffnungen (9-9') entsprechen, die auf dem Außenschenkel (2-2') gebildet sind.

13. Rinnenelement nach einem beliebigen der Ansprüche 9 bis 12, **dadurch gekennzeichnet, dass** die Befestigungsleiste (19) durch ein metallisches flaches Teil gebildet ist, das an seinen quer angeordneten Enden mit paarweise angeordneten Nasen (20-20') und (22-22') versehen ist, welche in ein und derselben Ebene in der Verlängerung der Leiste (19) angeordnet sind und deren Abmessungen und Abstände denjenigen der auf den Außenschenkeln (2-2') vorgesehenen Löcher oder Öffnungen (9-9') entsprechen.

14. Rinnenelement nach Anspruch 13, **dadurch gekennzeichnet, dass** die zwei paarweise angeordneten Nasen (22-22') einen nach oben weisenden 90°-Endknick (23-23') aufweisen, während die zwei Nasen (20-20') des anderen Endes der Leiste (19) gerade sind.

15. Rinnenelement nach Anspruch 13, **dadurch gekennzeichnet, dass** die vier Nasen ein und derselben Leiste (19) einen nach oben weisenden 90°-Endknick aufweisen.

16. Rinnenelement nach einem der Ansprüche 13 und 14, **dadurch gekennzeichnet, dass** Buckel die Endknicke (23-23') der Nasen ersetzen.

17. Rinnenelement nach einem beliebigen der Ansprüche 13 bis 16, **dadurch gekennzeichnet, dass** die paarweise angeordneten Nasen (22-22') auf einer der Seiten der Leiste (19) kanalseitig in eine Reihe von Löchern oder Öffnungen (9-9') eingeführt werden, die in einem der Außenschenkel (2') des Körpers (1) vorgesehen sind, und die Leiste (19) anschließend durch Drehen in horizontale Stellung zurückgeführt wird, so dass die paarweise angeordneten Nasen (20-20') auf der entgegengesetzten Seite der Leiste (19) durch horizontale Translation in die Reihe von Löchern oder Öffnungen (9-9') eingeführt werden können, die gegenüberliegend in dem anderen Außenschenkel (2) des Körpers (1) vorgesehen sind.

18. Rinnenelement nach einem der Ansprüche 12 und 16, **dadurch gekennzeichnet, dass** die Leiste (19) ein mit einem Gewinde versehenes Loch (21) und der Oberflächenrost (27) ein glattes Loch (29) aufweist, welche in deren Mitte angeordnet sind, um eine zentrale Befestigungsschraube (28) aufzunehmen.

19. Verfahren zur Herstellung des Körpers (1) eines Rinnenelements nach einem beliebigen der vorhergehenden Ansprüche, **dadurch gekennzeichnet, dass** ein geschlossenes, doppelwandiges, im wesentlichen ovales Profil (13), das in seinem oberen und in seinem unteren Teil mit einem anliegenden, eine Sohle bildenden Abstützbereich (5-5') versehen ist, durch Extrusion gebildet wird, auf der Außenwand beim Extrusionsaustritt mit Hilfe einer Raupenkette Wellen auf mindestens einem Teil der Seitenflächen der Außenwand gebildet werden und anschließend das Profil längs in zwei Elemente (14-14') geschnitten wird, welche anschließend quer auf die gewünschte Länge geschnitten werden.

20. Verfahren zur Herstellung des Körpers (1) eines Rinnenelements nach Anspruch 19, **dadurch gekennzeichnet, dass** nach dem Längsschnitt die Schenkel (2-2') der zwei Elemente (14-14') einen Höhenunterschied zwischen ihren Eintrittsenden (E1) und ihren Austrittsenden (E2) aufweisen.

21. Verfahren zur Herstellung des Körpers (1) eines Rinnenelements nach Anspruch 20, **dadurch gekennzeichnet, dass** eine Säge in Abhängigkeit von der Extrusionsgeschwindigkeit des geschlossenen Profils (13) gesteuert wird und sich seitlich von einer Mittelstellung (C-C) hin zu einer optimalen Stellung (B-B) bewegt.

22. Verfahren zur Herstellung des Körpers (1) eines Rinnenelements nach Anspruch 19, **dadurch gekennzeichnet, dass** nach einem Längsschneiden die Schenkel (2-2') der zwei Elemente (14-14') eine konstante Höhe aufweisen.

23. Verfahren zur Montage von Rinnenelementen nach einem der Ansprüche 4 bis 18, **dadurch gekennzeichnet, dass** das Ende der gewellten Außendoppelwand jeder Außenwand (2-2') quer geschnitten wird, um die gewellte Außenwand (4) von der glatten Innenwand des Körpers (1) zu trennen, dass die Enden der Versteifungsrippen (16, 16') des eine Sohle bildenden Abstützbereichs (5) der Rinne und des unteren, an die Sohle angrenzenden Teils der End-Wellen (4) ausgehöhlt werden und dass ein mit mindestens einer Reihe von Buckeln (33, 33') versehenes Verbindungsteil (32) in die an den Enden des Körpers (1) gebildeten Ausschnitte und Aussparungen eingeführt wird.

24. Montageverfahren nach Anspruch 23, **dadurch gekennzeichnet, dass** der quer verlaufende, durch Sägen realisierte Schnitt eine Öffnung schafft, welche Zugang zu einer Hohlkammer (30) gewährt, die im Inneren der Doppelwand ausgebildet ist und in der einer der Buckel (33, 33') des Verbindungsteils (32) einrastet.

25. Montageverfahren nach einem der Ansprüche 23 und 24, **dadurch gekennzeichnet, dass** die Ausnehmungen der Enden der Versteifungsrippen (16, 16') und des unteren Teils der Endwellen (4) durch ein Kontur-Aussägen der U-förmigen Innenwand mit Hilfe einer Säge auf jeder quer gesägten und gespreizten Fläche erzielt werden.

26. Bausatz mit zwei Rinnenelementen nach Anspruch 4 und einem Verbindungsteil für die Durchführung des Verfahrens nach einem beliebigen der Ansprüche 23 bis 25, **dadurch gekennzeichnet, dass** das Verbindungsteil (32) eine zu der glatten Wand komplementäre Form auf der Außenseite der Innenwand des Körpers (1) des Rinnenelements für sein eventuelles Kleben an diese Wand aufweist und mit mindestens einer Reihe von Buckeln (33, 33') versehen ist.

27. Bausatz nach Anspruch 26, **dadurch gekennzeichnet, dass** die Dicke des verbindungsteils (32) im wesentlichen der Dicke der Öffnung (29) entspricht, die durch Sägen in den Wellen (4) beim Querschneiden des Körpers (1) gebildet wird.

28. Bausatz nach Anspruch 27, **dadurch gekennzeichnet, dass** das Verbindungsteil (32) in dem unteren Teil und in der Mitte seiner Außenwand zwei ohrförmige seitliche Auswüchse (35, 35') aufweist, die komplementär sind zu denjenigen an den Enden der Versteifungsrippen (16, 16') des eine Sohle bildenden Abstützbereichs (5) und die als Verschluss der ausgehöhlten Teile dienen.

29. Bausatz nach Anspruch 28, **dadurch gekennzeichnet, dass** das Verbindungsteil (32) einen Rechts-Links-Doppelbuckel (33, 33') mit einer Form, die komplementär zu derjenigen der Endwellen (4) ist, aufweist, welcher auf der Außenseite der U-Form im Wesentlichen auf der oberen Hälfte der vertikalen Teile gebildet ist.

30. Bausatz nach Anspruch 29, **dadurch gekennzeichnet, dass** die Buckel (33, 33') auf ihrer Höhe eine ganze Reihe von horizontalen Kerben (39) aufweisen, die in regelmäßigen Abständen jeden der zwei Buckel in vielfache Abschnitte (40) schneiden.

31. Bausatz nach einem der Ansprüche 29 und 30, **dadurch gekennzeichnet, dass** das Verbindungsteil (32) einen zentralen Mittelanschlag (36) aufweist, der von seiner U-förmigen Innenwand ausgeht.

32. Bausatz nach einem der Ansprüche 29 und 30, **dadurch gekennzeichnet, dass** das Verbindungsteil (32) eine Elastomerdichtung (38) aufweist, die in eine zentrale Nut (37) eingesetzt ist, welche in der Mitte der U-förmigen Innenwand gebildet ist.

33. Bausatz nach einem beliebigen der Ansprüche 26 bis 32, **dadurch gekennzeichnet, dass** der Abstand zwischen den Buckeln (33, 33') vergrößert ist, um seitlich oder vertikal die Öffnung einer Wasserabflussleitung (42) oder eine Kabelumleitung aufzunehmen.

34. Bausatz nach einem beliebigen der Ansprüche 26 bis 32, **dadurch gekennzeichnet, dass** zwei Buckel (33, 33') aus der kanalseitigen Fläche einer Platte (45) kommen, die im wesentlichen das Profil des Körpers (1) mit seinem eine Sohle bildenden Abstützbereich (5) übernimmt, wobei die Buckel (33, 33') in den zwei Endwellen (4) des zu verschließenden Körpers (1) eingerastet sind.
